(19) Europäisches Patentamt
European Patent Office
Office européen des brevets

(11) EP 4 586 027 A1

(12) **EUROPEAN PATENT APPLICATION**

(43) Date of publication:
16.07.2025 Bulletin 2025/29

(21) Application number: 24151384.5

(22) Date of filing: 11.01.2024

(51) International Patent Classification (IPC):
G05B 17/02 (2006.01)      G06F 30/367 (2020.01)

(52) Cooperative Patent Classification (CPC):
G06F 30/367; G05B 17/02; G06F 2119/06

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Plexim GmbH
8005 Zürich (CH)

(72) Inventor: Allmeling, Jost
8802 Kilchberg (CH)

(74) Representative: Nückel, Thomas
Patentanwaltskanzlei Nückel
Eichweidstrasse 22
8820 Wädensvil (CH)

(54) **METHOD AND APPARATUS FOR SIMULATING AN ELECTRICAL CIRCUIT, DIGITAL REAL-TIME SIMULATOR, COMPUTER PROGRAM AND COMPUTER-READABLE MEDIUM**

(57)     The method is a computer-implemented method for simulating an electrical circuit, wherein the electrical circuit comprises at least one switch (S) and at least one AC source (ACS). The at least one switch is able to attain an open position and a closed position. In the method, the at least one switch is modeled by an equivalent circuit comprising a fixed-value resistor (R) and at least one of a controlled current source (J) or a controlled voltage source (V). In the method, the open position is simulated by means of an open-position controller (OPC), wherein the open-position controller is configured to control the current or voltage source. The open-position controller thereby comprises a resonator (RES). The method comprises a step of determining a current (i, ia, ib, ic) or voltage (vL) of the electrical circuit depending on the position of the at least one switch.

Fig. 11

**Description**

The invention relates to a method for simulating an electrical circuit. The invention further relates to an apparatus for simulating an electrical circuit. The invention further relates to a digital real-time simulator, a system with such a digital real-time simulator, a computer program and a computer-readable medium.

Electrical circuit simulation helps design engineers to predict and analyze the behavior of a physical plant, such as an electrical device, before a prototype of the physical plant is built. Simulation allows a model or virtual prototype to be created for the physical plant and tests to be performed under normal and faulty operating conditions. Since modifications to the model can be made quickly, simulation accelerates the development process and reduces time-to-market for new products.

A real-time simulator is an apparatus that emulates the behavior of the physical plant with the same speed as the wall clock time. In other words, when the simulation clock reaches a certain time in a real-time simulation, the same time has elapsed in the real world. A digital real-time simulator contains, for example, a processing unit such as a CPU, GPU, FPGA to compute a mathematical model of the physical system. The model is usually expressed in the form of differential equations.

Real-time simulators usually feature high-speed digital and analog inputs and outputs (I/O) to which other technical equipment, such as external electrical devices, can be connected. "External" herein means that it is a device which is different to or separate from the digital real-time simulator. Digital inputs can be used to read control signals. These signals can be, for example, pulses to drive semiconductors in a switching power converter that is simulated in the real-time simulator. Voltage and current values calculated by the real-time simulator can be made accessible via the analog outputs.

Real-time simulators are increasingly employed to test and validate external technical equipment, particularly control equipment, without a physical plant. The actual physical plant, i.e. the controlled system, is replaced by an appropriate dynamic model computed on the real-time simulator. Since the control equipment, which is connected to the real-time simulator, is embodied as (electronic) hardware, this use case is referred to as hardware-in-the-loop (HIL) testing. HIL simulations allow both the control hardware and software to be tested in a safe environment.

When simulating an electrical circuit in real time, the small time-constants and high dynamics of the electrical circuit pose challenges. To make the control equipment under test operate in the same way as when it is connected to a real electrical circuit, a real-time simulator must feature both high fidelity and low latency. This means that the simulation results must accurately represent the real voltages and currents in the electrical circuit and need to be computed extremely fast. The output of the real-time simulator must reflect signal changes at the simulator input within a few microseconds or less.

One objective of this invention is to contribute to an accurate simulation of an electrical circuit while maintaining a high simulation speed. In particular, a simulation with lower spurious leakage currents and less oscillations in comparison with other simulations shall be achieved. Further objectives to be achieved are to provide a data processing apparatus, a digital real-time simulator, a system and a computer program which carry out the method.

First, the method for simulating an electrical circuit is specified.

According to an embodiment, the method is a computer-implemented method for simulating an electrical circuit, wherein the electrical circuit comprises at least one switch and at least one AC source. The at least one switch is able to attain an open position and a closed position. In the method, the at least one switch is modeled by an equivalent circuit comprising a fixed-value resistor and at least one of a controlled current source or a controlled voltage source. In the method, the open position is simulated by means of an open-position controller, wherein the open-position controller is configured to control the current or voltage source. The open-position controller thereby comprises a resonator. The method comprises a step of determining a current or voltage of the electrical circuit depending on the position of the at least one switch.

By means of the open-position controller, the open position of the switch can be simulated with sufficient accuracy, while the required computing power is minimized and kept constant for all simulation steps so that a real-time simulation of complex electrical circuits is possible with both high fidelity and low latency. The implemented resonator turned out to efficiently suppress residual alternating currents or voltages in the electrical circuit resulting from the AC source.

The method enables a physical plant, comprising the electrical circuit, to be simulated in order to test external electrical devices (external hardware), such as controllers, in their interaction with the physical plant under realistic conditions. The physical plant does not have to be provided for this purpose but is replaced by the simulation. This helps to improve not only the design of the external electrical device, but also of the physical plant and to sort out defective external electrical devices, for example. This in turn increases efficiency and saves costs.

The method is, in particular, a computer-implemented method, i.e. is performed with the help of a processor such as a CPU or FPGA.

The simulated electrical circuit, herein also just referred to as electrical circuit, may comprise several switches and/or several AC sources. All features disclosed here for one switch also apply to all other switches in the electrical circuit. Likewise, all features disclosed for one AC source also apply to all other AC sources in the electrical circuit.

The at least one switch may be a circuit breaker or a contactor or a power semiconductor such as an IGBT or MOSFET. In the closed position, electrical current can flow through the switch. In the open position, a current flow through the switch shall be blocked.

By way of example, the simulated electrical circuit is an electrical circuit of a rectifier or an inverter. Thus, the simulated physical plant may be a power electronic converter.

The AC source can be a current source or a voltage source. The AC source has a supply frequency, which is also called "fundamental frequency". The fundamental frequency is, for example, in the range between 10 Hz and 1 kHz, and is typically 50 Hz or 60 Hz.

In addition to the AC source, the electrical circuit may comprise one or more DC sources. The DC source may be a current source or a voltage source.

During operation, the open-position controller receives a controller input and provides a controller output. The controller input may be information extracted from the electrical circuit, i.e. current or voltage measurements taken in the circuit. For example, the controller input is a current flowing through the at least one switch. The current source or voltage source is operated depending on the controller output in order to adjust the current flowing through the switch in the open position. The controller output may be a sum of different terms, wherein at least one term originates from the resonator or is attributed thereto. Particularly, the open-position controller is configured to control the current or voltage source in such a way that the current through the switch in the open position is minimized.

The determined current and/or voltage of the electrical circuit are, for example, a current and/or a voltage in the electrical circuit when the at least one switch is in the open position. The step of determining the current and/or voltage may be done repeatedly. For example, the current and/or voltage are determined before and after the at least one switch changes from the open position to the closed position or vice versa. The determined current and/or voltage may be converted into an output signal, herein also referred to as "second signal". The output signal may be transmittable or may be transmitted to an external electrical device.

According to a further embodiment, the resonant frequency $f_1$ of the resonator is tuned to, particularly matches or corresponds to, a frequency of the AC source. The frequency of the AC source may be the fundamental supply frequency. The resonant frequency $f_1$ may lie in the range between 0.9 to 1.1 times the frequency of the AC source or between 0.99 to 1.01 times the frequency of the AC source. For instance, the resonant frequency $f_1$ is equal to the frequency of the AC source.

According to a further embodiment, the fixed value resistor in the switch model has a resistance that corresponds to the rated voltage divided by the rated current. For example, the resistance value is 1 Ohm.

According to a further embodiment, the controller input of the open-position controller is representative of or based on a current or voltage determined in the electrical circuit. It may be the same current or voltage as mentioned above or a different voltage or current. The current or voltage determined in the electrical circuit can also be named current or voltage measurement, although it is not a real measurement as it is only an internal determination inside the simulation. Due to the internal measurement as a feedback signal, a closed control loop is formed which is stable and robust against external disturbances.

According to a further embodiment, the position controller is implemented in discrete time. In other words, a discrete-time model is used for the open-position controller. The discrete time-step $\Delta T$ is, for example, in the range of 0.1 $\mu s$ to 10 $\mu s$, especially 0.5 $\mu s$, 1 $\mu s$, or 2 $\mu s$.

According to a further embodiment, the resonator is a non-damped resonator. That is, the resonator has an infinite Q factor. The advantage of a non-damped resonator is that the current through the at least one switch can be controlled to exactly 0.

According to a further embodiment, the resonator comprises two series connected integrators with negative feedback. The integrators may be discrete-time integrators.

According to a further embodiment, the resonator is discretized based on first order forward Euler or backward Euler discretization. Alternatively, the resonator may be discretized based on second order Tustin (trapezoidal rule) discretization.

According to a further embodiment, the open-position controller comprises two or more resonators with different resonant frequencies. All features disclosed herein for one resonator also apply to all other resonators of the open-position controller. By way of example, the open-position controller comprises two or three or four or more resonators with different resonant frequencies. For example, the open-position controller comprises one resonator with resonant frequency $f_1$ and a second resonator with resonant frequency $f_2$. The frequencies may differ from each other by at least 10%, for example. The different resonant frequencies may correspond to different frequencies of one AC source or to different frequencies of different AC sources. Particularly, the electrical circuit may then comprise one AC source with fundamental frequency $f_1$ and a further AC source with fundamental frequency $f_2$.

According to a further embodiment, the resonators are connected in parallel.

According to a further embodiment, the controller output of the open-position controller is or comprises a weighted sum of the outputs of the resonators. For example, the weighting factors (also referred to as "gain factor") for the different resonators are similar or equal to each other. For instance, the weighting factor for each resonator deviates from the weighting factor(s) of the other resonator(s) by at most 20%.

According to a further embodiment, the open-position controller further comprises an integrator. The integrator can be a discrete time integrator. The integrator is, in particular, configured to suppress a DC current component through the switch while the switch is in the open position.

According to a further embodiment, the controller output is or comprises a weighted sum of the output of the integrator and the output of the one or more resonators. For example, the weighting factor of the integrator is similar or equal to the weighting factor of the resonator or of one of the resonators. By way of example, the weighting factor of the integrator deviates by at most 50% from the weighting factor of the resonator or of one of the resonators.

According to a further embodiment, the sum of all weighting factors in the weighted sum is between zero and two. Particularly, the sum of all weighting factors is between 0.5 and 1.5, for example.

According to a further embodiment, the current and/or voltage are determined by means of at least one set of time-invariant equations. The time invariant equations are, for example, differential equations describing the electrical circuit.

According to a further embodiment, the current and/or voltage are determined using a discrete-time inversion-free solver with a fixed simulation time-step $\Delta T$.

According to a further embodiment, the at least one switch is a mechanical switch or a power semiconductor. Mechanical switches comprise, for example, a circuit breaker and/or a contactor and/or a relay and/or a manual switch. Power semiconductors comprise, for example, a diode, and/or a thyristor and/or a TRIAC (triode for alternating current) and/or a GTO (gate turn-off thyristor) and/or an IGCT (integrated gate-commutated thyristor) and/or an IGBT (insulated-gate bipolar transistor) and/or a MOSFET (metaloxide-semiconductor field-effect transistor).

According to a further embodiment, the open-position controller further comprises at least one filter, i.e. one or more filters. All features disclosed herein for one filter also apply to all other filters of the open-position controller.

The filter or filters help to suppress spurious oscillations of the electrical current through the switch in the open position. Such oscillations can result, for example, from a DC source in the electrical circuit. Indeed, the modelling of the switch by the above-mentioned equivalent circuit controlled by an open-position controller makes the switch in the open position behave like a small capacitance, which can lead to spurious oscillations in the open position. By implementing one or more filters into the open-position controller, these oscillations can be further suppressed.

According to a further embodiment, the filter is a low-pass filter. Especially the use of a low-pass filter leads to a robust and sufficiently accurate simulation which minimizes spurious oscillations.

According to a further embodiment, the filter is a first-order filter. By using a first-order filter, the required computing power is reduced, allowing very fast real-time simulation of complex electrical circuits.

According to a further embodiment, the controller output of the open-position controller is or comprises the weighted sum of the outputs of the one or more resonators and the one or more filters and, optionally, of the integrator. Also here, the sum of all weighting factors may lie between zero and two, for example between 0.5 and 1.5. All the weighting factors may be equal or similar.

According to a further embodiment, the cutoff frequencies of the filters differ from each other. For example, the cutoff frequencies of the filters are logarithmically distributed over a given frequency range.

According to a further embodiment, the closed position is simulated by means of a closed-position controller. This enables not only an electrical circuit with a switch in an open position to be simulated, but also the change to the switch into the closed position, and, of course, also the change back to the open position so that the electrical circuit can be simulated with the switch in all positions.

According to a further embodiment, the current and/or the voltage are determined during a changeover between the open-position controller and the closed-position controller. The changeover may be induced based on an external control signal or internal control signal. The internal control signal is a control signal generated inside the electrical circuit. The external control signal is a control signal generated outside the electrical circuit, for example by the external electrical device.

As an example, a diode is a switch that is controlled by internal control signals: The diode changes to the closed position when the voltage across the diode measured from the anode to the cathode becomes positive. The diode changes to the open position when the measured current through the diode becomes negative.

A MOSFET is a switch that may be controlled by an external control signal: The MOSFET is in the closed position only if the external gate signal is active. Otherwise, the MOSFET is in the open position.

According to a further embodiment, the method comprises a step of receiving an input signal, also called "first signal", from an electrical device. The electrical device is, in particular, an external electrical device, i.e. separate from the simulator. The electrical device may be a controller. Particularly, the external electrical device is an electronic device. The first signal may be a digital signal. The first signal may be the above-mentioned external control signal. The simulator may comprise a simulator input provided to receive the first signal.

According to a further embodiment, the method comprises a step of controlling the simulated electrical circuit depending on the first signal. For example, the first signal is a signal for changing the position of the at least one switch. Accordingly, controlling the simulated electrical circuit depending on the first signal may comprise changing the position of the switch.

According to a further embodiment, the method comprises a step of generating an output signal, also called "second signal", which is representative of the determined current or voltage of the electrical circuit. The second signal is, for example, an analog signal. The current or voltage of the electrical circuit can be extracted from the second signal. The simulator may comprise a simulator output intended to transmit the second signal to an input of the electrical device.

According to a further embodiment, the method comprises a step of transmitting the second signal to the external electrical device. The external electrical device may evaluate the second signal and generate a control signal dependent on the second signal, in order to operate the simulated electrical circuit in the desired manner. Since the control signal generated by the external electrical device is the same as the "first signal" fed into the simulator the control is performed in a closed loop. In this way, the external electrical device can be tested with the help of the simulation of the electrical circuit. Particularly, by exchanging the first and second signals, hardware-in-the-loop testing of the external electrical device is performed.

Next, the data processing apparatus is specified. The data processing apparatus comprises means for carrying out the method according to any one of the embodiments described herein. For this purpose, the data processing apparatus may comprise one or more processing units such as CPUs, GPUs, FPGAs.

Next, the digital real-time simulator (DRS for short) is specified. The digital real-time simulator comprises the data processing apparatus as described herein. Since the data processing apparatus and, accordingly, the digital real-time simulator, are configured to perform the method according to any one of the embodiments described herein, all features disclosed for the method are also disclosed for the digital real-time simulator or the data processing apparatus and vice versa.

As described above, the digital real-time simulator is a device that emulates the behavior of a physical system or apparatus with the same speed as the wall clock time. In other words, when the simulation clock reaches a certain time in a real-time simulation, the same time has elapsed in the real world. The digital real-time simulator computes a mathematical model of the physical system. The model is usually expressed in the form of differential equations.

According to a further embodiment, the digital real-time simulator is configured to be connected to an electrical device. The electrical device is extern to the real-time simulator. It can also be referred to as "device under test" (DUT for short). To enable the connection, the digital real-time simulator may comprise one or more physical interfaces. Likewise, the electrical device may comprise one or more physical interfaces for this connection.

According to a further embodiment, the connection to the external electrical device is such that the first signal from the electrical device, i.e. the signal provided by the external electrical device, can be received by the digital real-time simulator to operate the electrical circuit according to the first signal. The first signal may be a digital signal, and, accordingly, the interfaces for the first signal transfer may be digital interfaces transmitting, e.g., electrical or optical pulses.

According to a further embodiment, the connection to the external electrical device is such that the second signal which is representative of the determined current or voltage of the electrical circuit can be transmitted to the external electrical device. The second signal may be an analog signal and, accordingly, the interfaces for the second signal transfer may be analog interfaces transmitting, e.g., continuously changing electrical voltages.

As a specific example: The digital real-time simulator may comprise high-speed digital and analog input and output (I/O) interfaces to which other technical equipment can be connected. The digital input interface(s) can be used to read first signals, e.g. control signals. These signals can be, for example, pulses to drive the power semiconductors in a switching power converter that is simulated in the real-time simulator. Voltage and current values calculated by the real-time simulator can be made accessible via the analog output interfaces.

The digital real-time simulator may therefore be employed to test and validate external electrical devices, like control equipment, without a physical plant.

Next, the system is specified. The system comprises the digital real-time simulator and an external electrical device, such as a controller, which are connected to each other in order to exchange signals (first and second signals) and to test the external electrical device, e.g. in order to perform hardware-in-the-loop testing of the external electrical device.

Since the system comprises the digital real-time simulator, all features disclosed for the digital real-time simulator are also disclosed for the system and vice versa. During operation of the system, first and second signals are exchanged between the digital real-time simulator and the external electrical device.

Next, the computer program is specified. The computer program comprises instructions which, when the program is executed by a computer, cause the computer to carry out the method according to any one of the embodiments described herein.

Next, the computer-readable medium is specified. The computer-readable medium comprises instructions which, when executed by a computer, cause the computer to carry out the method of any one of the embodiments described herein.

Hereinafter, the method for simulating an electrical circuit, the data processing apparatus, the digital real-time simulator, the system and the computer program will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.

In the figures:

Figure 1 shows a flowchart for simulating an electrical circuit,

Figure 2 shows a model of a switch,

Figure 3 shows a model of a switch which is in a closed position,

Figure 4 shows a model of a switch which is in an open position,

Figure 5 shows a single-phase AC circuit including a switch,

Figures 6 and 7 show graphs of an electrical current,

Figure 8 shows a three-phase diode rectifier with an AC source and an AC switch,

Figures 9 and 10 show graphs of electrical currents and a voltage,

Figure 11 shows an exemplary embodiment of a switch model with an open-position controller,

Figure 12 shows graphs for the input and the response of a resonator at resonant frequency,

Figure 13 shows another exemplary embodiment of a switch model with an open-position controller,

Figures 14 and 15 show further exemplary embodiments of a switch model with an open-position controller,

Figure 16 shows a graph of an electrical current,

Figure 17 shows graphs of electrical currents and a voltage,

Figure 18 shows another exemplary embodiment of a switch model with an open-position controller,

Figure 19 shows an exemplary embodiment of a system comprising an exemplary embodiment of the digital real-time simulator, and

Figure 20 shows a further exemplary embodiment of a switch model with an open-position controller.

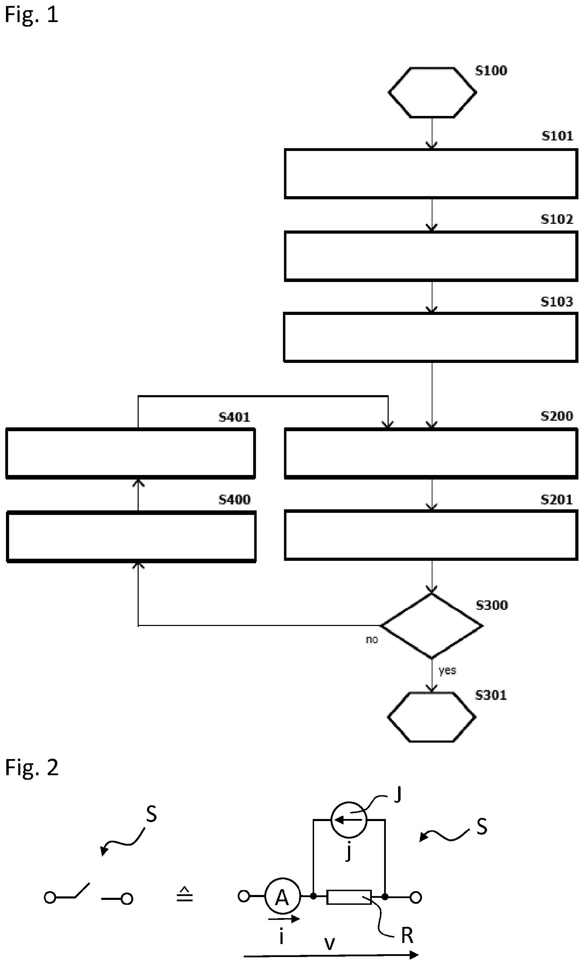

Figure 1 shows a flowchart of an exemplary embodiment of a computer program for simulating an electrical circuit. The computer program can be executed by a data processing apparatus. The data processing apparatus can be implemented, for example, in a computer comprising a processing unit, a program and/or data memory and one or more communication interfaces. The computer comprises or is, for example, a digital real-time simulator.

The digital real-time simulator contains, for instance, a processing unit such as a CPU, GPU, FPGA to compute a mathematical model of a physical plant.

In the method, an electrical device with an electrical circuit is simulated. The electrical circuit comprises at least one switch and at least one AC source. The at least one switch is able to attain an open position and a closed position. The at least one switch is modeled by an equivalent circuit comprising a fixed-value resistor and at least one of a controlled current source or a controlled voltage source. The open position is simulated by means of an open-position controller, wherein the open-position controller is configured to control the current or voltage source and the open-position controller comprises a resonator. Optionally the closed position is simulated by means of a closed-position controller which for example, may be represented by a short circuit.

In the following the term "switch position" is also used when referring to the open position or the closed position.

In a step S100, the program is started and, for example, the discretization time-step ∆T and the simulation end time are chosen. In the following the discretization time-step T may also be named "simulation time-step ∆T".

In a step S101, the at least one switch, especially multiple switches in the electrical circuit, are replaced with associated discrete circuit (ADC) switch models. The ADC switch model comprises a fixed-value resistor connected in parallel to a controlled current source or a controlled voltage source.

In a step S102, based on the electrical circuit, a set of differential equations is calculated that mathematically describe the electrical circuit.

In a step S103, variables such as inductor currents and capacitor voltages as well as switch positions are initialized.

In a step S200, a simulation step is computed using the previously computed set of differential equations. A current and/or voltage of the electrical circuit is determined depending on the position of the at least one switch.

In a step S201, the simulation time is increased by the discretization time-step ∆T.

In a step S300 a decision is made whether to end the simulation, for example because the simulation end time has been reached, or to compute another simulation step.

In a step S400, the current switch position (open or closed) is determined for the at least one switch. The decision is based on internal measurements and/or external control signals.

In a step S401, the source current in the current source of the ADC model of the at least one switch is calculated depending on the switch position using either the open-position controller or the closed-position controller.

The sequence consisting of steps S200, S201, S300, S400 and S401 can be executed multiple times.

In a step S301, the program is stopped and can be started again in the step S100.

In the following, the open-position controller will be explained in more detail.

Electrical circuits consisting of components such as resistors, capacitors, inductors, transformers, sources and meters can be mathematically expressed as a set of differential equations that accurately describe the dynamics of the circuit. If the circuit is linear, these equations are constant. They are calculated once before the simulation starts and are then valid for the entire simulation run.

Simulating circuits containing switches in real time is difficult because switches such as circuit breakers, contactors or power semiconductors exhibit sharp discontinuities when turned on and off. At the system level, the behavior of switches is best represented by ideal on/off switches in an otherwise linear circuit. The switch position of each switch can be expressed by a variable s, where s = 0 denotes an open switch (position) and s = 1 denotes a closed switch (position). However, the circuit topology, and hence the mathematical description of the circuit, changes each time an ideal switch is toggled. Therefore, the system equations must be recalculated for each combination of switch positions. If the circuit contains N independent switches, the number of linear equation systems representing the circuit is $2^N$. Since the different equation systems cannot be computed on the fly but must be calculated and stored in advance, the number N of ideal switches in a real-time application is limited to less than a dozen in practice.

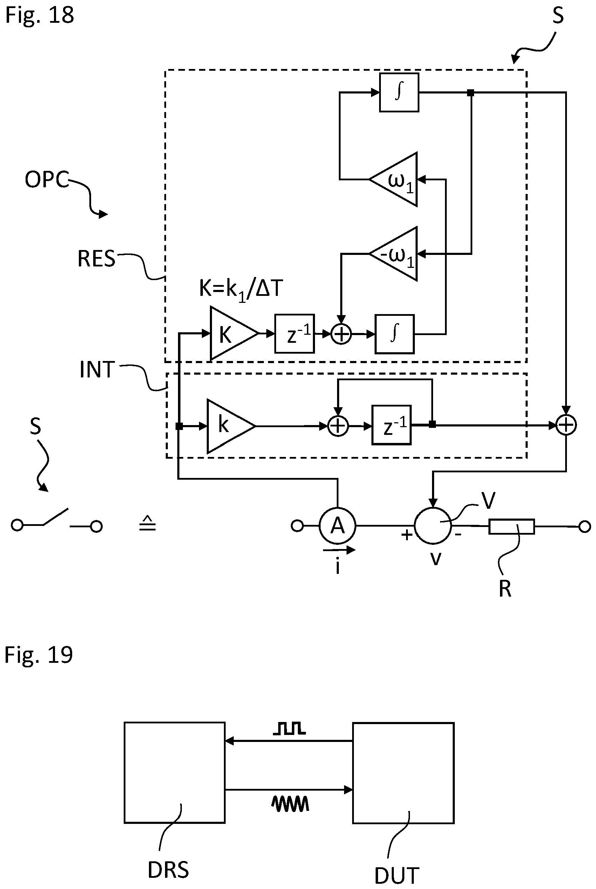

One way to circumvent the large number of equation systems is not to represent switches S by ideal switches, but by a fixed-value resistor R connected in parallel to a variable current source J as depicted in figure 2. This implementation is referred to as the associated discrete circuit (ADC) switch model. Alternatively, the switch S can be represented by a resistor connected in series with a variable voltage source V (see, e.g., figure 18). Since the resistor R is a linear component, the electrical circuit as a whole can be mathematically described as a fixed admittance matrix or as a single set of linear ordinary differential equations. The network equations can either be solved using modified nodal analysis (MNA) or a state-space (SS) solver.

To make the resistor R in connection with the current source J behave like an ideal switch, the current source J can be controlled according to the following objectives: When the switch S is open (s = 0), the steady-state current i through the switch S shall be zero. When the switch S is closed (s = 1), the voltage v across the switch S shall be zero. The steady-state current i is measured with an ammeter A.

Digital real-time simulators typically employ discrete-time solvers with a fixed simulation time-step ∆T. In an iteration-free fixed-step solver, the computation of the source current $j_{n+1}$ at the new simulation step n+1 can only be based on measurements at previous simulation steps n or earlier. It is assumed that for a small time-step $\Delta T = t_{n+1} - t_n$ the switch current i and voltage v do not change much between two consecutive simulation steps:

$$i_{n+1} \approx i_n \qquad\qquad (1)$$

$$v_{n+1} \approx v_n \qquad\qquad (2)$$

Based on this assumption, the following calculation rule is proposed to approximate the ideal switch characteristic:

$$j_{n+1} = \begin{cases} -i_n & if \ s_{n+1} = 1, \\ i_n + j_n & if \ s_{n+1} = 0. \end{cases} \tag{3}$$

If switches are implemented with the rule suggested in equation (3), the approximation makes a closed switch S (short circuit) behave like a small inductance

$$L_{on} = R\Delta T \tag{4}$$

and an open switch S (open circuit) like a small capacitance

$$C_{off} = \Delta T / R \tag{5}$$

with $\Delta T$ being the discretization time-step. However, in inductive networks, which are typical for power systems, the capacitance $C_{off}$ of an open switch S forms a resonator with the inductances in the circuit which leads to spurious oscillations, respectively unwanted overvoltages and overcurrents.

Such kinds of oscillations can be reduced by making the switch S in the open position behave like a series-connected $R_{off} C_{off}$ circuit instead of a pure capacitor $C_{off}$. In this approach, only a fraction k of the resistor R is used to represent the equivalent capacitor $C_{off}$

$$C_{off} = \Delta T / (kR) \tag{6}$$

while the remainder is used for damping purposes:

$$R_{off} = (1 - k)R \tag{7}$$

The update rule from equation (3) is hence modified as

$$j_{n+1} = \begin{cases} -i_n & if \ s_{n+1} = 1, \\ ki_n + j_n & if \ s_{n+1} = 0. \end{cases} \tag{8}$$

with the gain $k \in (0,1]$.

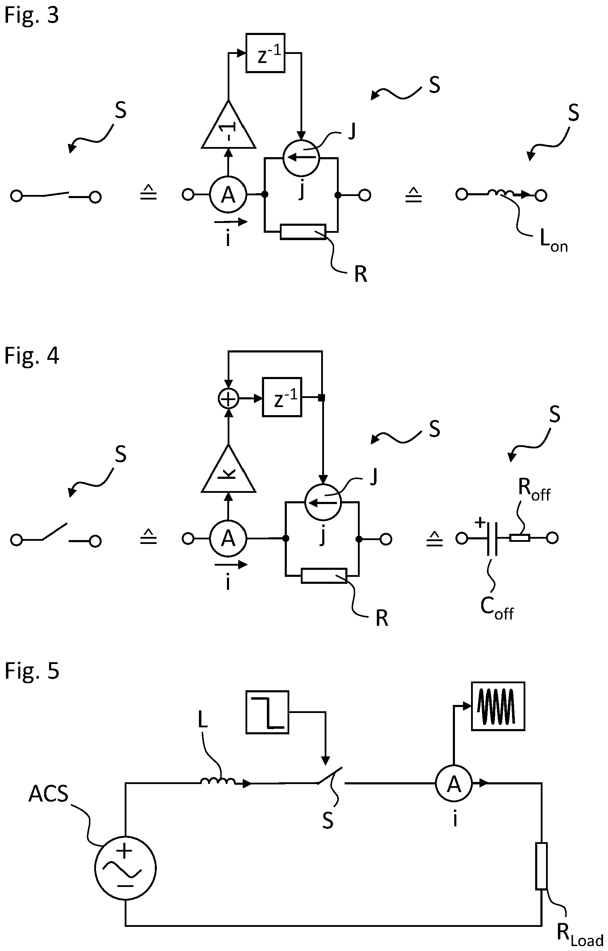

Figures 3 and 4 illustrate the implementation of a switch S in the closed (on) position and the open (off) position using the update rule from equation (8). The unit delay $z^{-1}$ is referred to the simulation time-step $\Delta T$. Both figures also show the equivalent electrical circuit.

If a DC voltage is applied across such an approximate switch model in the open position, the discrete-time integrator in figure 4 will regulate any residual leakage current i to zero. As a consequence, no leakage current flows through the switch S in steady-state.

However, when an AC voltage is applied across the switch S, a persistent nonzero residual AC current flows through the switch. This residual leakage current results from the fact that the approximate discrete-time switch model of figure 4 in the open position acts like a capacitor. If $\hat{v}_s$ is the magnitude of the AC voltage across the switch S and f is the frequency of the voltage, the magnitude $\hat{i}_r$ of the residual current through the switch S can be calculated as:

$$\hat{i}_r = \frac{\hat{v}_s}{\sqrt{\frac{1}{(2\pi f C_{off})^2} + R_{off}^2}} \tag{9}$$

As an example, figure 5 shows an AC circuit, where an AC voltage source ACS having a supply frequency $f_1 = 50$ Hz supplies a resistive load $R_{Load} = 5$ Q via an inductance L = 1 mH. The resistive load $R_{Load}$ can be disconnected from the AC voltage source ACS (for example with amplitude = 100 V, frequency $f_1 = 50$ Hz) by means of a switch S. The switch S opens at the first zero-crossing of the current after the control signal has become inactive.

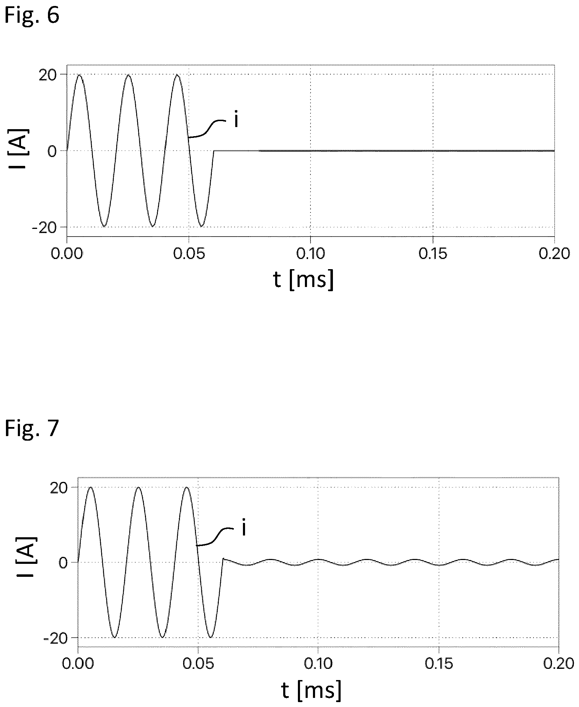

If the switch S is modeled with an ideal switch, the current waveform as depicted in figure 6 is obtained. After the switch S has opened at t = 0.06 s, the current i is exactly zero.

Figure 7 shows the same current i if the switch S is modeled with an approximate switch model as described above. With the approximate switch model, a persistent leakage current can be observed after the switch S has opened. This leakage current has the same frequency $f_1$ as the exiting voltage source ACS.

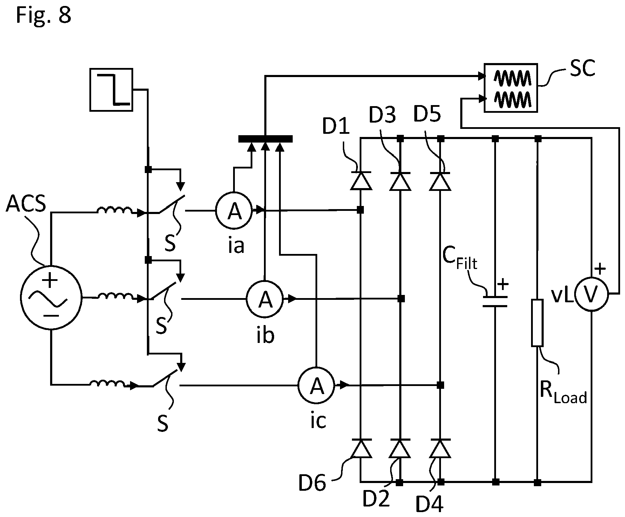

A second example is a three-phase diode rectifier with a filter capacitor $C_{Filt}$ (e.g. of 100 $\mu$F) on the DC side and a resistive load $R_{Load}$ (e.g. of 20 $\Omega$) as illustrated in figure 8. The rectifier is connected to the AC grid comprising a three-phase voltage source ACS and a grid impedance via a three-phase circuit breaker. By way of example, the AC source ACS delivers an amplitude of 325 V and a frequency $f_1$ of 50 Hz. The rectifier is modeled with ideal diodes D1 to D6. The measured currents and voltages are displayed on a scope SC.

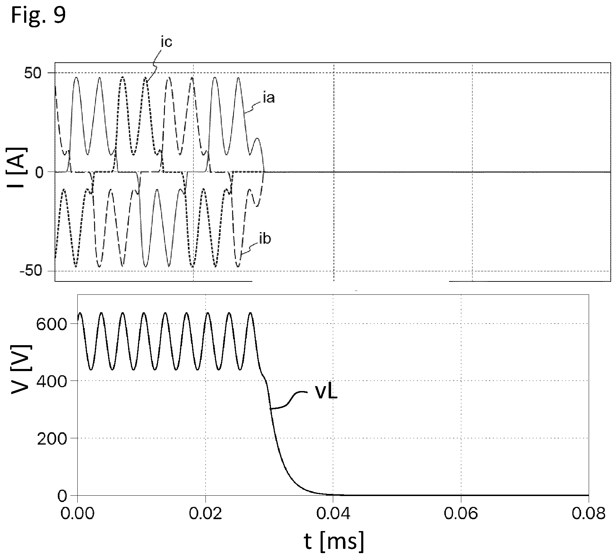

If the switches S of the three-phase circuit breaker are modeled with ideal on/off-switches, the waveforms of figure 9 are obtained. After the circuit breaker has disconnected all three phases, the AC current ia, ib, ic is exactly zero (see upper graph in figure 9). As current can no longer flow from the AC to the DC side, the DC voltage vL also decays rapidly to zero (see lower graph of figure 9).

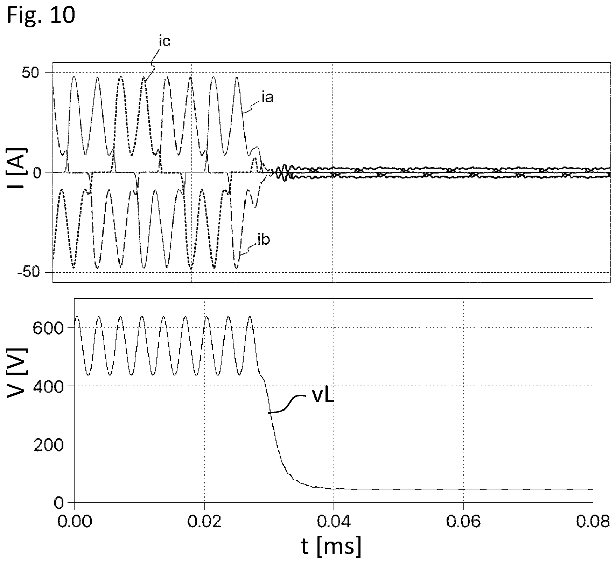

If an approximate switch model is employed instead of the ideal on/off switches, a significant amount of AC leakage current continues to flow into the rectifier. This can be seen in figure 10. Although the circuit breaker is open and the rectifier is therefore disconnected from the grid, the DC capacitor $C_{Filt}$ remains energized via the leakage current and the load continues to be supplied, albeit at a lower voltage vL. In summary, the voltages and currents deviate significantly from the ideal case when using an approximate switch model.

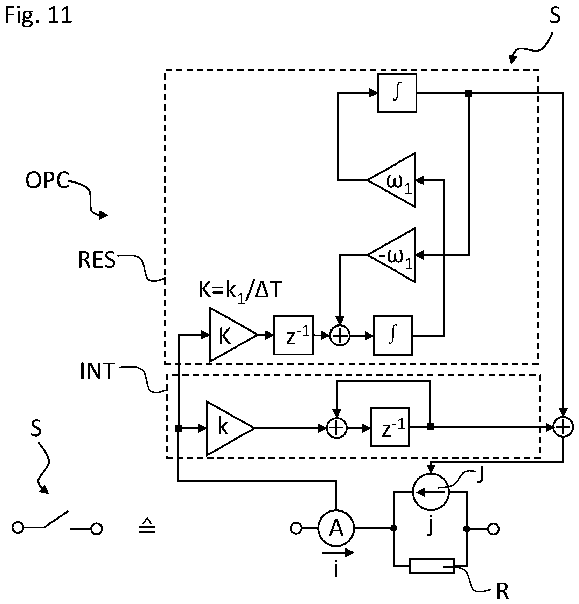

This problem is solved by the method according to the present invention. In order to eliminate spurious AC leakage currents, an open-position controller OPC is proposed for controlling the current source J while the switch S is in the open position. The open-position controller OPC comprises a resonator RES. This resonator RES may augment the discrete integrator INT from equation (8) or figure 4 as illustrated in the exemplary embodiment of the switch model of figure 11.

The purpose of the resonator RES is to block AC signals having a specific frequency without adversely affecting the DC performance of the open-position controller OPC. Therefore, the resonator RES is preferably tuned to the fundamental frequency $f_1$ or $\omega_1$ of the AC circuit or the AC source and is connected in parallel to the discrete-time integrator INT.

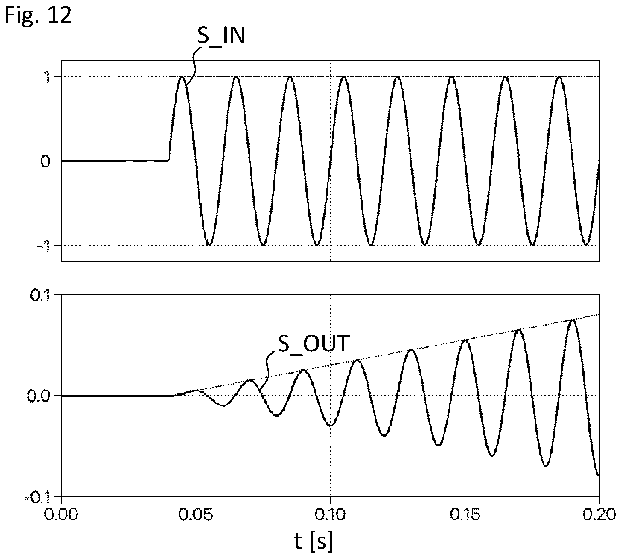

Figure 12 demonstrates the operating principle of a resonator. The top graph in the figure shows a sinusoidal signal S_IN that is applied to the input of the resonator at the time t = 0.04 s. The frequency $f_1$ = 50 Hz of the first signal corresponds to the resonant frequency of the resonator. As soon as the first signal is applied, the resonator responds with a sinusoidal signal S_OUT the amplitude of which increases linearly from zero over time. This response is shown in the lower graph. Analogous to an integrator, which produces a linearly increasing output signal when a constant input is applied, a resonator performs an integration of the envelope of a sinusoidal signal. The envelopes of the input and output signals are depicted as dotted lines in figure 12.

The resonator RES of figure 11 is excited by the leakage current i through the switch S and acts like an integrator on the amplitude of an AC signal that matches the fundamental frequency $f_1$. The output of the resonator RES is added to the output of the discrete-time integrator INT, which regulates the DC current through the switch S to zero.

The resonator RES can be realized with two series-connected integrators with negative feedback. The desired resonant frequency $f_1$ determines the loopback gain $-\omega_1^2 = -(2\pi f_1)^2$. The gain (weight) $k_1$ for the AC compensation is typically chosen to be equal to the gain (weight) k for the DC compensation.

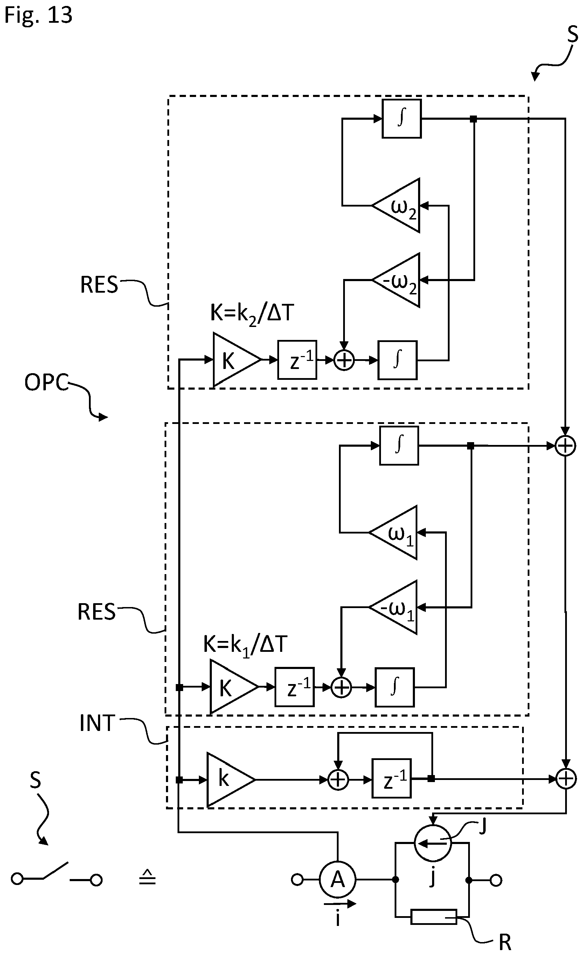

If more than one dominant frequency is present in the circuit, multiple resonators RES individually tuned to those frequencies can be connected in parallel. Figure 13 shows an exemplary embodiment of an open-position controller OPC compensating two frequencies $f_1$ and $f_2$.

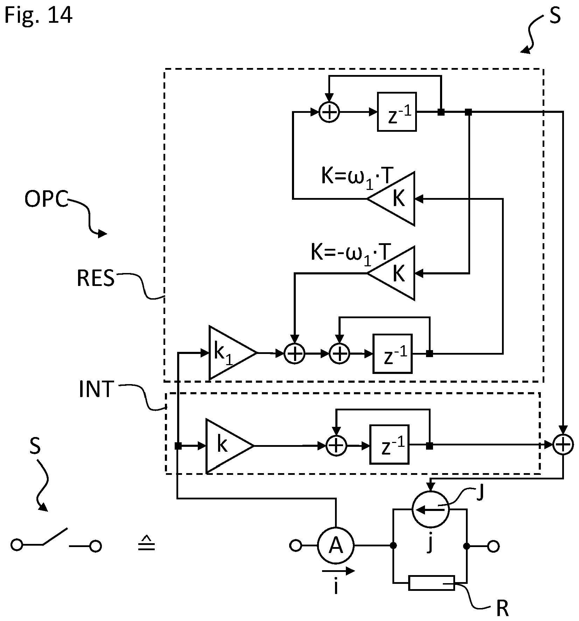

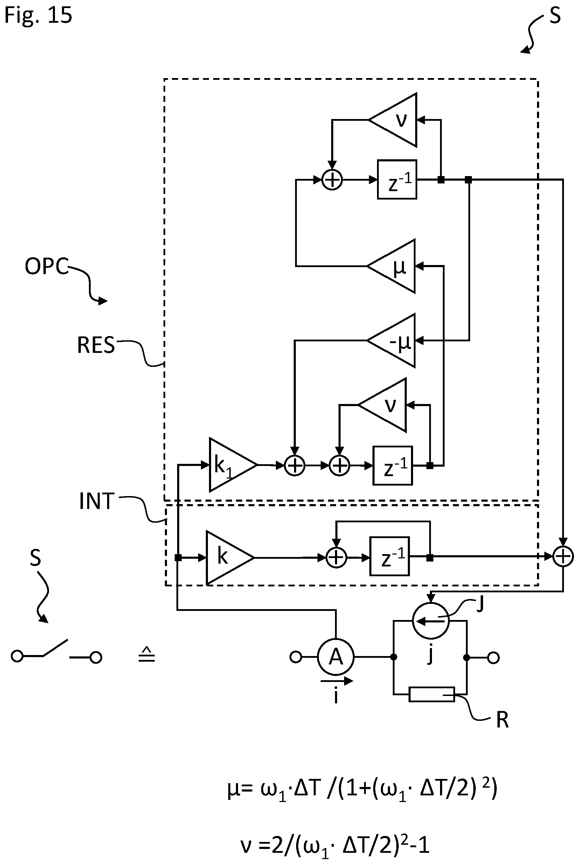

Since the resonators RES may be computed on an FPGA, they may be discretized for practical implementation. Figure 14 shows the first order Forward Euler discretization and figure 15 shows the second order Tustin discretization (trapezoidal rule).

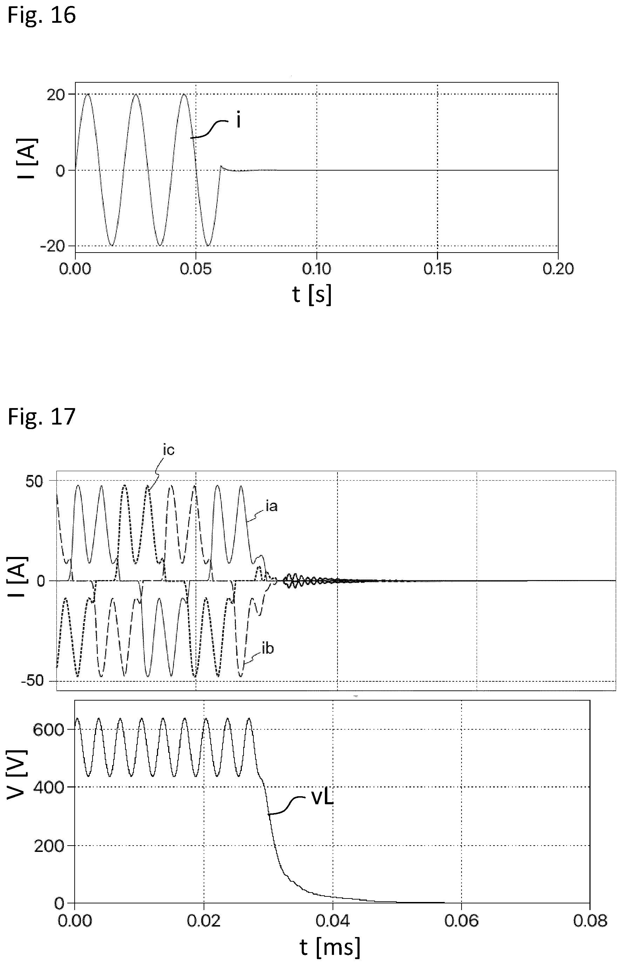

Figure 16 shows the current waveform for the circuit of figure 5 if the circuit breaker / switch S is modeled with an approximate switch model containing a resonator as described, for example, in connection with figures 15. When the circuit breaker S is in the open position, the open-position controller OPC depicted in figure 15 is employed. The resonant frequency of the resonator RES is tuned to the fundamental frequency $f_1$ = 50 Hz of the voltage source ACS, and the gains are set to k = k1 = 0.2. After the circuit breaker S has opened, the residual current i quickly decays to zero. There is no longer an AC leakage current.

Likewise, figure 17 shows the grid currents ia, ib, ic and the load voltage vL for the circuit in figure 8 if the circuit breaker is modeled with an approximate switch model containing a resonator. After the circuit breaker has disconnected all three phases, the open-position controller OPC depicted in figure 15 is employed in each of the three phases. Again, the resonator frequencies are tuned to the fundamental frequency $f_1$ = 50 Hz of the AC grid, and the gains are set to k = k1 = 0.2. When the circuit breaker is completely open, the residual currents ia, ib, ic in all three phases decay to zero. Since there is no persistent leakage current, the DC side is no longer supplied and the DC voltage vL also quickly becomes zero.

The conclusion is that the new open-position controller, incorporating a resonator, effectively blocks any leakage current with the fundamental frequency or frequencies.

Figure 18 shows an exemplary embodiment, where the switch model comprises a controlled voltage source V instead of a controlled current source J.

Figure 19 shows an exemplary embodiment of a system comprising an exemplary embodiment of the digital real-time simulator DRS. The digital real-time simulator DRS is configured to carry out the method as described before.

The digital real-time simulator DRS is electrically connected to an external electrical device DUT, which may be an electronic device, such as a controller. A digital first signal from the external electrical device DUT is transmitted to the digital real-time simulator DRS. The digital real-time simulator DRS drives the electrical circuit depending on the first signal, e.g. it changes the position of the switch S of the electrical circuit depending on the first signal.

The behavior of the electrical circuit driven by this first signal is then simulated and a voltage or current, for example the voltage across or the current through the switch S are determined. This determined current and/or voltage are converted into an analog second signal which is sent to the external electrical device DUT, which may be operated according to the second signal or may evaluate the second signal. In this way, the external electrical device DUT can be tested under very realistic conditions without the need for a real physical plant to which it is connected, because the real physical plant is accurately simulated by the digital real-time simulator.

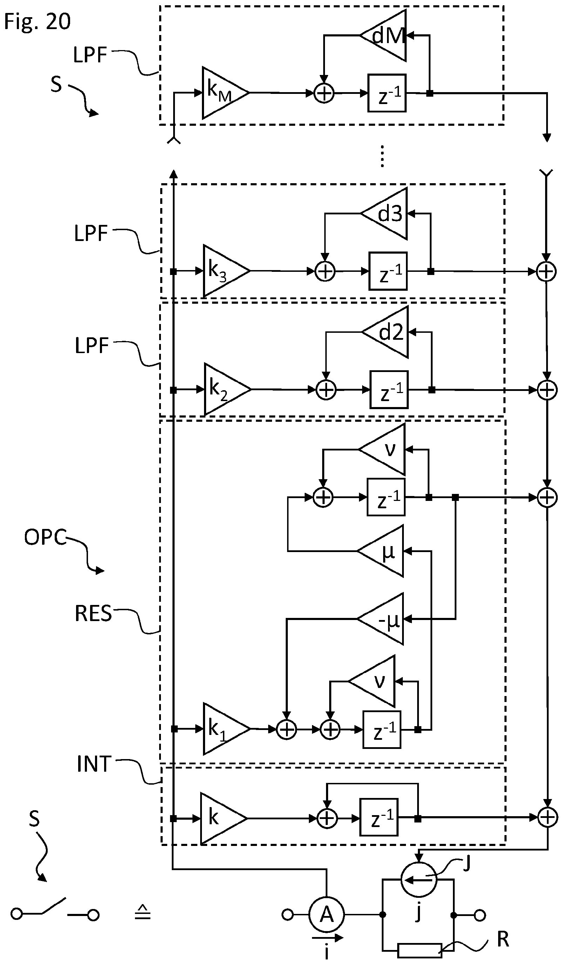

Figure 20 shows a further exemplary embodiment where the switch model comprises, besides the integrator INT and the resonator RES, several low-pass filters LPF connected in parallel to the resonator RES and the integrator INT. The controller output of the open-position controller OPC is a weighted sum of the outputs of the integrator, the resonators and the filters. The gain factors k, k1 and k2 to kM may all be equal or similar, for example around 0.2.

The cut-off frequencies $\omega_m$ of the individual low-pass filters LPF may be:

$$\omega_m = \frac{1}{T}\left(\frac{1}{d_m} - 1\right) \qquad (10)$$

with $2 \le m \le M$ and $d_m$ being the damping coefficients. In order to attenuate oscillations over a wide frequency range, it is advantageous to distribute the cutoff frequencies $\omega_m$ logarithmically across the frequency range.

Reference sign list:

| S100 to S103 | method steps |
| S200, S201 | method steps |
| S300, S301 | method steps |
| S400, S401 | method steps |

| S | switch |
| J | current source |
| V | voltage source |
| i, ia, ib, ic | currents |
| j | current |
| v | voltage |
| A | ammeter |
| vL | voltage |
| D1 to D6 | diodes |
| ACS | AC source |
| R | fixed value resistor |
| OPC | open-position controller |
| RES | resonator |
| INT | integrator |
| LPF | filter |

| $L_{on}$ | inductance |
| $C_{off}$ | capacitance |
| $R_{off}$ | resistance |
| $R_{Load}$ | resistive load |

L        inductance
$C_{Filt}$    filter capacitor

SC        scope
S_IN       signal
S_OUT     signal

DRS     digital real-time simulator
DUT     external electrical device

**Claims**

1. Computer-implemented method for simulating an electrical circuit, wherein

    - the electrical circuit comprises at least one switch (S) and at least one AC source (ACS),
    - the at least one switch (S) is able to attain an open position and a closed position,
    - the at least one switch (S) is modeled by an equivalent circuit comprising a fixed-value resistor (R) and at least one of a controlled current source (J) or a controlled voltage source (V),
    - the open position is simulated by means of an open-position controller (OPC), wherein the open-position controller (OPC) is configured to control the current source (J) or voltage source (V),
    - the open-position controller (OPC) comprises a resonator (RES),
    - wherein the method comprises determining a current (i, ia, ib, ic) or voltage of the electrical circuit depending on the position of the at least one switch (S).

2. Method according to claim 1, wherein

    - the resonant frequency of the resonator (RES) is tuned to a frequency of the AC source (ACS).

3. Method according to claim 1 or 2, wherein

    - a controller input of the open-position controller (OPC) is based on a current (i, ia, ib, ic) or voltage determined in the electrical circuit.

4. Method according to any one of the preceding claims, wherein

    - the open-position controller (OPC) is implemented in discrete time.

5. Method according to any one of the preceding claims, wherein

    - the resonator (RES) comprises two series-connected integrators with negative feedback.

6. Method according to any one of the preceding claims, wherein

    - the resonator (RES) is discretized based on first order Forward Euler or Backward Euler discretization or second order Tustin discretization.

7. Method according to any one of the preceding claims, wherein

    - the open-position controller (OPC) comprises two or more resonators (RES) with different resonant frequencies,
    - the resonators (RES) are connected in parallel.

8. Method according to any one of the preceding claims, wherein

    - the open-position controller (OPC) further comprises an integrator (INT).

9. Method according to claim 8, wherein

    - a controller output of the open-position controller (OPC) comprises a weighted sum of an output of the integrator (INT) and an output of the resonator (RES).

10. Method according to any one of the preceding claims, wherein

    - the current and/or voltage are determined by means of at least one set of time-invariant equations.

11. Method according to any one of the preceding claims, wherein the current and/or voltage are determined using a discrete-time inversion-free solver with a fixed simulation time-step ($\Delta$T).

12. Method according to any one of the preceding claims, wherein the at least one switch (S) is a mechanical switch or a power semiconductor.

13. Method according to any one of the preceding claims, further comprising

    - receiving a first signal from an electrical device (DUT),
    - controlling the electrical circuit depending on the first signal,
    - generating a second signal, which is representative of the determined current (i, ia, ib, ic) or a voltage of the electrical circuit,
    - transmitting the second signal to the electrical device (DUT).

14. Data processing apparatus comprising means for carrying out the method of any of the claims 1 to 13.

15. Digital real-time simulator (DRS), wherein

    - the digital real-time simulator (DRS) comprises a data processing apparatus for carrying out the method of claim 13,
    - the digital real-time simulator (DRS) is configured to be connected to the electrical device (DUT) such that

        - the first signal from the electrical device (DUT) can be received by the digital real-time simulator (DRS) in order to operate the electrical circuit according to the first signal, and
        - the second signal which is representative of the determined current (i, ia, ib, ic) or the determined voltage of the electrical circuit can be transmitted to the external electrical device (DUT).

16. Computer program comprising instructions which, when the program is executed by a computer, cause the computer to carry out the method of any of the claims 1 to 13.

17. Computer-readable medium comprising instructions which, when executed by a computer, cause the computer to carry out the method of any of the claims 1 to 13.

Fig. 1

Fig. 2

Fig. 3

Fig. 4

Fig. 5

Fig. 6

Fig. 7

Fig. 8

Fig. 9

t [ms]

Fig. 10

Fig. 11

Fig. 12

Fig. 13

Fig. 14

Fig. 15

$$\mu = \omega_1 \cdot \Delta T / (1 + (\omega_1 \cdot \Delta T/2)^2)$$

$$\nu = 2/(\omega_1 \cdot \Delta T/2)^2 - 1$$

Fig. 16

Fig. 17

Fig. 18

Fig. 19

Fig. 20

| | Europäisches Patentamt / European Patent Office / Office européen des brevets | **EUROPEAN SEARCH REPORT** | **Application Number** EP 24 15 1384 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DAGBAGI MOHAMED ET AL: "ADC-Based Embedded Real-Time Simulator of a Power Converter Implemented in a Low-Cost FPGA: Application to a Fault-Tolerant Control of a Grid-Connected Voltage-Source Rectifier", IEEE TRANSACTIONS ON INDUSTRIAL ELECTRONICS, IEEE SERVICE CENTER, PISCATAWAY, NJ, USA, vol. 63, no. 2, 1 February 2016 (2016-02-01), pages 1179-1190, XP011591296, ISSN: 0278-0046, DOI: 10.1109/TIE.2015.2491883 [retrieved on 2016-01-08] | 1-8, 10-17 | INV. G05B17/02 G06F30/367 |
| A | * abstract * * Sec. II 3, IV; figures 6, 12, 16 * | 9 | |
| Y | DAGBAGI M ET AL: "FPGA implementation of Power Electronic Converter real-time model", POWER ELECTRONICS, ELECTRICAL DRIVES, AUTOMATION AND MOTION (SPEEDAM), 2012 INTERNATIONAL SYMPOSIUM ON, IEEE, 20 June 2012 (2012-06-20), pages 658-663, XP032221865, DOI: 10.1109/SPEEDAM.2012.6264543 ISBN: 978-1-4673-1299-8 | 1,3,4,6, 8,10-17 | TECHNICAL FIELDS SEARCHED (IPC) G05B G06F |
| A | * Sec. 4 B; pages 659, 662 - page 663; figures 1, 3 - 5 * | 9 | |

-/--

The present search report has been drawn up for all claims

| Place of search | Date of completion of the search | Examiner |
|---|---|---|
| Munich | 17 June 2024 | Lampmann, Arne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 15 1384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MCGRATH B P ET AL: "Accurate state space realisations of resonant filters for high performance inverter control applications", 2016 IEEE 2ND ANNUAL SOUTHERN POWER ELECTRONICS CONFERENCE (SPEC), IEEE, 5 December 2016 (2016-12-05), pages 1-6, XP033059745, DOI: 10.1109/SPEC.2016.7846186 [retrieved on 2017-02-07] | 1-8,10, 13-17 | |
| A | * abstract * * Sec. I, II, IV, V * | 9 | |
| Y | HU BINJIANG ET AL: "Two-level VSC real-time simulation modeling method based on controlled source compensation", 20230925, vol. 12788, 25 September 2023 (2023-09-25), pages 127884C-127884C, XP060188687, ISSN: 0277-786X, DOI: 10.1117/12.3004386 ISBN: 978-1-5106-6827-0 | 1-8, 10-17 | |
| A | * Sec. 3.2, 4.1; figure 6 * | 9 | TECHNICAL FIELDS SEARCHED (IPC) |

The present search report has been drawn up for all claims

| Place of search | Date of completion of the search | Examiner |
|---|---|---|
| Munich | 17 June 2024 | Lampmann, Arne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)